# EUROPEAN PATENT APPLICATION

(11) **EP 2 717 554 A1**
(43) Date of publication of application: **09.04.2014**
(21) Application number: 12187115.6
(22) Date of filing: 03.10.2012
(51) Int. Cl.: H04M 3/42, H04M 3/436

(54) **Pre-call initialisation delivery of context rich caller and callee ID on digital communication devices**

(71) Applicant: Closed Link B.V., 1071 AB Amsterdam (NL)
(72) Inventor: Wolters, Leonard, 1075 AB Amsterdam (NL); Moolenburgh, Willem, 1075 AB Amsterdam (NL)

(57) **Abstract**

Methods and a system enabling users to send and receive context rich call information prior to phone or video call initiation on digital communication devices.

The caller enters in an integrated texting and calling interface on his device a callee and call context. This information is send to a central server using a secured protocol, where the central server automatically enriches the call context with personal information, reputations and social distance and decides whether to allow the request. If accepted, enriched context related data is sent to caller and callee device and after successful delivery on both devices, the actual call gets initiated from the caller's device.

The immediate presentation of the caller's context data on the callee's device during call notification enables the callee to make an informed decision on an incoming call. The receiver can then carry out various call actions dependent on situation, intent and level of trust.

## Description

### Technical Field

This invention relates generally to telecommunications and, more particularly, to caller and callee identification for digital communication devices.

### Background Art

A whole range of affordable, digital network devices such as smart mobile phones, tablets and personal computers and ubiquitous communication networks enable users to be reached and to reach out throughout the day and without the constraint of location. Many users see the merit of heightened connectivity, but it also leads to an increase in volume of phone calls, video calls, emails, and messages - all competing for the user's attention. In addition, as a consequence of greater connectivity, users more and more frequently may receive calls from unidentified senders whose name is for example not yet in the contact list of the receiver's device.
It would be helpful for the receiver, especially in the enterprise environment, to be able to obtain more visual information about the caller and the relevant context prior to taking the call. It would enable callees to make more informed decisions about how to allocate their attention.

Several methods and systems exist for providing metadata as part of calls. European Patent 2 288 188 A2 filed by Nokia in 2000 describes a mobile communication subscriber profile matching system where mobile users are put in contact or advised on each other through a phone call or other medium based on their location and similarity in their profiles. The system focuses on bringing people together who don't know each other but share similar interests or people who know each other but don't know that they are in the same location. When a match is made, a prompt is sent to the two individuals with details on the match and contact information such as name and phone number (clause 0053). The intelligence is in the network and not on the devices. The user remains responsible for initiating the call (user experience). When calling, the receiver does not receive information about the caller depriving this person of the context of the call (information). Furthermore, it only allows for mobile-to-mobile communication (scope).

Several methods and systems exist for providing metadata as part of calls. European Patent 2 288 188 A2 filed by Nokia in 2000 describes a mobile communication subscriber profile matching system where mobile users are put in contact or advised on each other through a phone call or other medium based on their location and similarity in their profiles. The system focuses on bringing people together who don't know each other but share similar interests or people who know each other but don't know that they are in the same location. When a match is made, a prompt is sent to the two individuals with details on the match and contact information such as name and phone number (clause 0053). The intelligence is in the network and not on the devices. The user remains responsible for initiating the call (user experience). When calling, the receiver does not receive information about the caller depriving this person of the context of the call (information). Furthermore, it only allows for mobile-to-mobile communication (scope).

United States Patent 2010/0124914 filed by Ofer Gottfriend, USA offers a method to retrieve and display relevant caller information in "real time" on the receiver's mobile phone using the Caller's ID. The add-on information is retrieved when the phone is ringing. The invention includes a smart procedure to maximize the amount of data send during call notification using amongst others Round Trip Time as a control variable. The invention focuses on maximizing the speed of communication.
The invention does create a delay on the receiver's side (user experience). The context of the call does not include "real time" information such as subject of the call or call priority. It only shows centrally stored information about the caller (information). The architecture is based around the receiver and does not take the caller into account (architecture). The most basic information such as the contact name is send via UDP protocol, which does not guarantee the delivery of data packages and making it more prone to hacker break-ins (security). Furthermore, dependent on the strength of the Internet signal, more or less data is transferred and shown to the receiver making the experience not consistent over time (user experience). The invention only allows for mobile-to-mobile communication (scope).

United States Patent 2012/0115449 filed by Holger Bruchelt, Germany describes a mobile device caller ID extension allowing for the identification of callers during call notification. A Call ID is normally passed shortly after call initiation. An incoming call is matched with a Caller ID via an agent or application on the user device. Detailed information about the caller such as calendar availability is passed from the server to the device. The display and control units allows for an adjustable, extended call display with call related schedule and profile information. The communication between the mobile device and the server depends on the quality of the signal. Bandwidth usage is minimized by only passing Caller IDs around.
This invention allows users to make an informed decision on whether or not to take the call. The architecture depends on a classic client/server structure on top of the communication network. The invention puts any delays during call notification in delivery of the content on the side of the receiver (user experience). Information is only send to callee. The caller is not informed about the callee (architecture). The invention focuses on time related information sharing such as such as Calendar events, overlooking the social relation between caller and callee, e.g. the 'trust' factor (information).

### Summary of invention

It is the principal objective of the present invention to provide methods and a system to display context rich information prior to phone or video call initiation on both the caller's and the callee's digital communication device. Context rich call information such as but not limited to the subject and the urgency of the call, the caller's personal information, the callee's (i.e. the person being called or call receiver) personal information, their reputations and the social distance between them is stored in a central server, and pushed out to both the sender's as well as the receivers' digital communication device.

### Technical Problem

Call identification systems on communication devices are designed in such a way that waiting time due to any delay in transmission and processing time occurs on the receiver's side - even to the point that the waiting time is longer than the call negotiation rendering the information function void.
The receiver deals thus with a non-consistent user experience.

### Solution to Problem

The disclosed invention assures that all caller and call related information is present on the callee's communication device prior to call initiation.

### Advantageous effect of invention

The receiver gets immediate access to enriched call and caller information during call negotiation - when the communication device flashes, rings or vibrates - enabling the callee to make an informed decision about how to handle the incoming call whilst the caller gets informed about the callee prior to call initiation.

### Brief description of drawings

In order to understand the invention and to see how it may be carried out in practise, a preferred embodiment will now be described, by way of non-limiting example only, with reference to the accompanying drawings, in which:

Figure 1 is a schematic illustration of the context information generating flow, performed according the principles of the present invention.

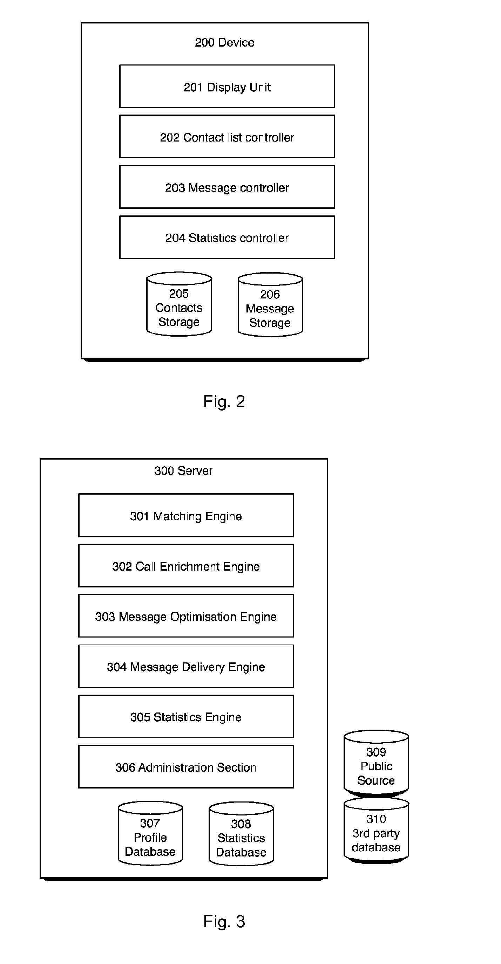

Figure 2 is a schematic illustration of the components on the digital communication device.

Figure 3 is a schematic illustration of the components of the central server.

Figure 4 shows a front view illustrating an embodiment of the mobile device displaying an integrated texting and calling interface on the caller's communication device.

Figure 5 shows a front view illustrating an embodiment of the mobile device displaying a context rich notification of the receiver on the caller's communication device prior to call initiation and during call notification.

Figure 6 shows a front view illustrating an embodiment of the mobile device displaying a context rich notification of an incoming call on the callee's communication device during call notification.

### Detailed description

As described herein, a caller and callee identification enhancement provides context rich information on both the caller's and the callee's communication device. The system verifies that this information is placed on the two communication devices prior to call initiation. Novel to this invention is that any waiting time due to slow data connections or long server processing time happens on the caller's side and not any longer on the callee's. The design of the invention enables the receiver to make an informed decision about how to handle an incoming call whilst informing the caller about the callee.

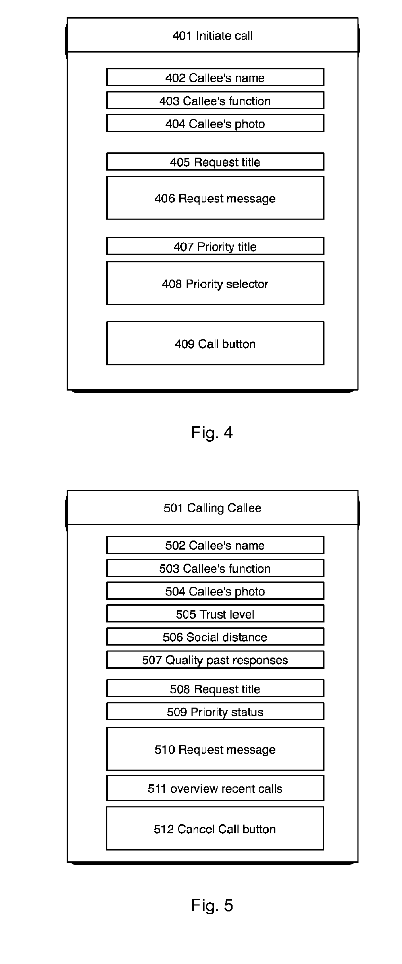

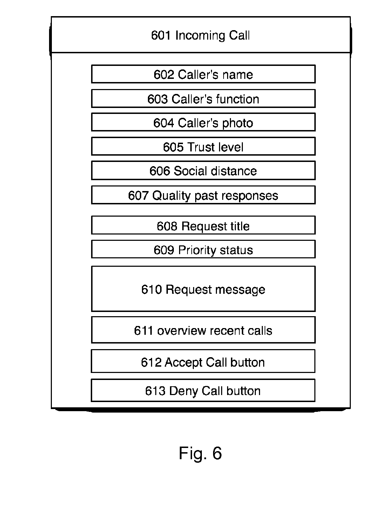

A method to implement the Caller and Callee identification enhancement performed by a display unit and controllers operating on a caller's and callee's communication device and a central server. The caller enters the context of the call such as the subject and the priority and selects the recipient in an integrated user interface. The caller's device connects with a remote server prior to call initiation (see Figure 4). The server matches the caller and callee, enriches the call with user context information on the caller and callee and delivers this content plus the call related context information respectively to the sender's and the receiver's device. When the call is then initiated on the caller's device, the combined user and call context information is shown without a delay on the receiver's device from the start of the call notification phase (see Figure 6). The context information on the caller's devices device is shown prior to call initialisation (see Figure 5).

Context information falls into two categories: call and user. The call related context information consists of real time elements such as the subject (405,406,508,510,608,610) and the priority of the call (407,408,509,609). The user context information is made up of profile related information such as name (502,602), picture (504,604), video, function (503,603), location, etc. and social related information between the caller and the callee such as trust (505,605), social distance (506,606), past interactions (511,611), quality past interactions (507,607), shared connections, etc.

A digital communication device is capable of sending and receiving communications, such as, phone calls, video calls, text messages, messages with other content types, and so forth. Digital communication devices can be of a variety of types, such as a mobile phone, a smartphone, a handheld computer, a personal computer, a personal digital assistant, a tablet, a game device, a satellite phone, a media device, etc. The device has a processor, an operating system and a temporary storage in order to run programs and to store context rich information.

The device (200) consists of the following display & control units: (201) a display unit to capture user entered information and to show information to the user, (202) a contact list controller that enables the user to select callees from the locally stored contact list, (203) a message controller that assembles, encrypts, sends, receives, matches and prepares to display messages, (204) a statistics controller that tracks the call and send the information to the server, (205) a contacts storage to add, update, retrieve and delete contracts from, and (206) a message storage to add, update, retrieve and delete messages from.

The sender enters the call related context information in an integrated texting and calling user interface on the communication device (see Figure 4; 402, 403, 404). This information can also be entered via voice command. The information gets processed by control units on the communication device, transmitted to the server, processed and transmitted to the callee's device.

The context rich information on the caller's device is not (exactly) the same as on the callee's device. The caller has access to the callee' context rich information prior to call initiation. When a selected receiver's device is turned off or when the call is rejected or after call completion, the caller gets other 'similar' or 'related' people to contact suggested based on the call's context information.

The display unit and controllers will run a plurality of operating systems (OS). Each OS will require a different way to display the callee and caller information. The most important distinction is the level of openness of the operating system. For example, in Android call notification can be customised making it relatively easy to display caller and callee information at this stage.

The server (300) searches for relevant user information associated with the sender's and receiver's caller numbers or identification numbers. The server can be based at any Internet site. It is set-up to handle multiple incoming and outgoing communication transmissions. It can search and retrieve user data from a database, it can connect to public Internet sources, user authorised Internet sources such as Linkedin and connect to 3^{rd} party databases. The server runs automated content update protocols to keep the user information on store up to date. The server next to a database with user profiles consists of the following components: (301) user matching engine, (302) call enrichment engine, (303) message optimisation engine, (304) message delivery engine, (305) statistics engine and (306) administration section.

Fast transaction and processing time remain important success factors. When the lookup and caller enrichment happens exclusively on the receiver's side, the query has to be executed within a few seconds. With the waiting time on the caller' side rather than the receiver's, the query may be slower before users get annoyed, but ideally it is executed within the same timeframe.

Security is an important issue, especially in the enterprise environment. All communication between a device and the server is encrypted. Data stored on the devices as well as on the server is encrypted. The system verifies that all information safely has been transmitted. The type of encryption protocol can be defined for an individual enterprise or network - all communication between members of the same organisation will be handled with the selected protocol enabling the system to serve a variety of encryption protocols ranging from heavy & secure to fast & non-existent.

Governance is an importance issue, especially in the enterprise environment. (301) The user matching engine on the server checks during the matching process if a caller has access to a callee. Access can be granted or denied based on preset rights. Rights are defined per an individual enterprise or network.

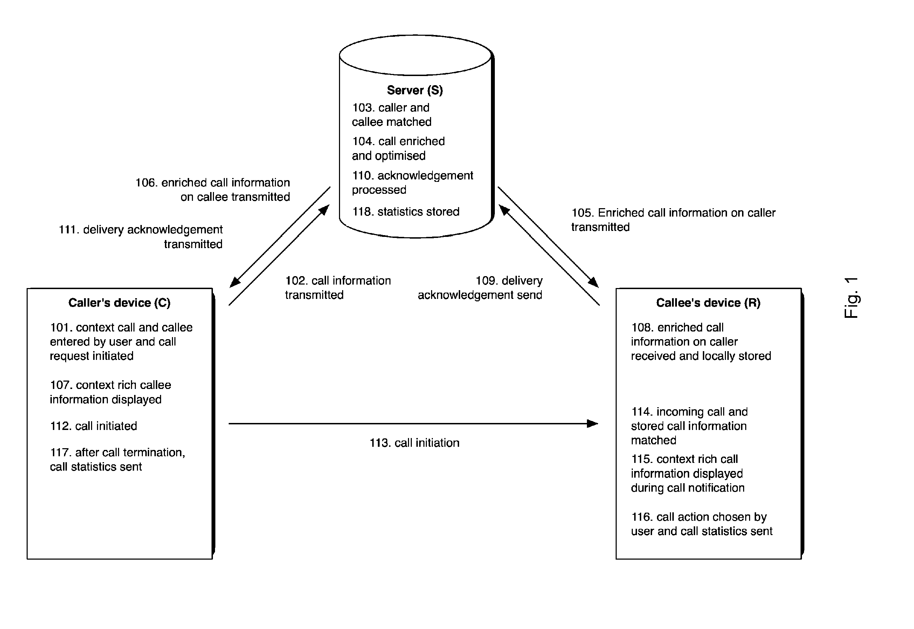

Figure 1 is a schematic illustration of context information generating flowthe caller and callee identification enhancement method of an embodiment of a system allowing enhanced caller & caller identification prior to caller initialisation.

A display and control unit is present on the caller's communication device and in the majority of cases also on the callee's. The caller enters or selects a callee's name and enters optionally, amongst others the topic and/or priority in an integrated texting and calling user interface operating on communication device C. After the caller has pressed call button (409) call a call initiation process in the control unit is triggered showing to 'wait for call initialisation'-work in progress message to the caller (step 101; 401). The program sends the call information consisting the caller ID, the receiver ID or phone number if no ID is locally available to the server, and if present amongst others the subject and priority (step 102). If no connection is present, the caller will get notified and when the caller wants to continue, the call gets initiated without the possibility of informing the callee. The caller has at all times the option to cancel the call (512).

When a connection can be established between the caller's device and the server, both the caller and the receiver are matched in the server's user database (step 103; 301). The system validates if a caller has access to a callee. If the caller has no access, a "no access" notification will be sent to the caller's device as well as by the system recommended users who are relevant for the context of the call and to which the user has access.
If the receiver is not known to the system, public sources are searched in order to compile a receiver profile in real-time. A 'receiver unknown' notification plus a real time profile if present, is send back to the caller's device and the caller gets notified via the program. If the caller wants to continue, the call gets initiated without the possibility of informing the callee.
If the receiver is known to the system, relevant social and caller specific context information is retrieved (302) and together with call context information bundled in an optimised message ready for transfer (step 104, 303). The delivery mode for the message depends on the receiver's device, the operating system that runs on the device, the type of connection and the quality of the connection (304). This information is stored on the Server and if need be verified by 'pinging' the receiver's device.
If the receiver's device is not connected, a 'receiver offline' notification plus the callee's profile is sent back to the caller's device and the caller gets notified. If the caller still wants to make the call, the call gets initiated directly - without informing the callee.

If an Internet connection is present, the optimised message containing context information about the caller and the nature of the call is send to the program running on the receiver's device (step 105) and stored (step 108). The program checks if the message has been delivered in full and if so sends back a delivery confirmation message to the server (step 109). If the message has not been delivered in full, the server will continue to push the message out until the maximum waiting time set by the caller has been passed. The delivery acknowledgement is processed on the server (step 110) triggering a data delivery confirmation message to be sent to the caller's device (step 111).

When the receiver is known to the system, relevant social and callee specific context information is retrieved and together with call context information bundled in an optimised message ready for transfer to the caller (step 104). The delivery mode for the message depends on the receiver's device, the operating system that runs on the device, the type of connection and the quality of the connection (304). This information is stored on the server and if need be verified by 'pinging' the caller's device. The optimised message containing context information about the caller and the nature of the call is send to the program running on the caller's device (step 106). Information about the callee replaces the waiting screen and is shown to the user (step 107 and Figure 5; 501).

When both the message with the receiver context information as well as the data delivery acknowledgement from the callee has been received, the device initiates the call and informs the caller of this event via visual, physical or auditory signals (step 112). The call is delivered via a multitude of possible networks such as GSM or Voice over IP (step 113).

The call initiation is received by the callee's device. The program matches the incoming call with the caller ID and the stored enriched call information on the caller (step 114). If there is a match, a display with the context rich call and user information is shown to the callee during call notification - when the phone rings or vibrates (step 115 and Figure 6; 601). If there is no match, the callee is matched with the local phone book. If this does not generate a result, a screen with a message "unknown caller" is shown to the callee during call notification.

During call notification the receiver can choose from a number of possible reactions dependent on situation, intent and level of trust such as 1. Accept the call (612) 2. Deny (613); 3. Forward to voicemail; 4. Respond by texting back; or 5. Reschedule the call for a later moment (step 116).

After the call has been completed or when it has been abandoned at an earlier stage, the display and control units on both the receiver (step 116) as well the caller's device (step 117) sends call statistics to the server where they are stored (step 118; 305). Via (306) the administration section on the server, users, organisation and networks can be added, deleted or modified, and e.g. security and governance settings modified.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative feature serving the same, equivalent or similar purpose, unless expressly stated otherwise. Thus unless expressly stated otherwise, each feature disclosed is one example only of a generic series of equivalent or similar features.

The invention is not limited to this embodiment. It is more broadly directed to a diverse set of useful, helpful and information services in human-to-human video and phone communication. It improves any existing or forthcoming service by utilizing context related information as an immediate answer to the "Who are you?", "What is it you want to call me about" and Who are you in relation to me?".

### Industrial applicability

In one possible application of the invention, contact between colleagues in large organisations is enhanced. When in a meeting a participant can see on his device who is calling, how this person relates to the receiver, about what, and with what urgency. At this point the participant can make an informed decision about the appropriate action to take.

### Citation list

EP 2288188 A (NOKIA CORPORATION) 17.08.2000
EP 1170932 A (TEXAS INSTRUMENTS FRANCE) 06.07.2000
US 2011/0201320 A (MICROSOFT CORPORATION) 18.08.2011
US 2011/0014900 A (OFER GOTTFRIED) 20.01.2011
US 2012/0115449 A (HOLGER BRUCHELT) 10.05.2012

Patent literature [0044]

## Claims

1. A method to deliver context rich information on the caller's and callee's digital communication device prior to phone or video call initiation and to display on these devices whilst in communication with a remote server, said method comprising:
Enabling the caller to select a receiver and enter context related information via a user interface on the digital device;
Assembling the given input into a message;
Connecting the device over the Internet to the remote server and sending the assembled message to the server;
Displaying a 'wait for call initialisation' screen on the caller's device;
Identifying, matching and validating the caller and callee on the remote server based on the sent message;
Enriching and optimizing the call on the remote server;
Sending enriched call information on caller to receiver's device;
Storing the call information on the receiver's device;
Sending enriched call information on callee to caller's device;
Displaying enriched call information on callee on caller's device;
Confirming the delivery of the rich content on the receiver's communication device
Sending delivery on receiver's device acknowledgement to caller's device via the remote server;
Displaying successful delivery on caller's device and trigger call initiation;
Connecting caller's device with receiver's device;
Matching call from caller with stored enriched call information on caller on callee's device;
Displaying enriched call information on caller on callee's device;
Sending call statistics from caller and callee's device after call completion and
storing these on remote server;
such that the receiver can make an informed decision about how to handle an incoming call during the call negotiation phase whilst informing the caller about the callee prior to call initiation. In addition, the design of the invention assures that any waiting time due to transmission and processing delay's happens on the caller's end rather than the callee's; and it enables secure communication as well as the application of governance rules to phone and video communication.

2. The method of the claim **1,** wherein the selection of the receiver can be both made from using a list of contacts stored on the caller's device, or by entering a telephone number via a keyboard or other entry method.

3. The method of the claim **1,** wherein the call related context information consists of real time elements such as the subject and the priority of the call.

4. The method of the claim **1,** wherein the caller can enter or select the receiver and add call related context within one screen of the user interface.

5. The method of the claim **1,** wherein the message to the server from the caller's device and vice versa is compressed and encrypted; as well as the message from the server to the receiver's device and back enabling secure communication.

6. The method of the claim **1,** wherein the identification of a caller and a receiver happens based on a caller and callee ID or phone number as a key.

7. The method of the claim **1,** wherein said communication between the server and the communication devices is configured for a fast transaction of a few seconds in order to enable fast responses from the system to the users.

8. The method of the claim **1,** wherein caller's and callee's are matched on the server and then their relation validated using predefined governance rules stored on the server.

9. The method of the claim **1,** wherein the call gets enriched by retrieving the caller and callee's profiles from the user database.

10. The method of the claim **9,** further comprising a method to create a callee' profile in real-time from public sources in case the receiver is not known to the system.

11. The method of the claim **1,** wherein the optimisation and delivery mode for the message depends on the receiver's device, the operating system that runs on the device, the type of connection and the quality of the connection. This user specific information is stored on the server and if need be verified by 'pinging' the device.

12. The method of the claim **1,** wherein the by the callee received contact rich call information on the caller is temporarily stored on the device. When the caller initiates the call, the call is matched with the locally stored call information. The matched call information is displayed on the callee's device.

13. The method of the claim **1,** wherein call statistics are send to the server and stored after a successfully completed call or a by the caller cancelled call or call error.

14. The method of the claim **1,** wherein a receiver is not yet known to the system and the caller initiates a direct call, the receiver receives after call completion a message with an invitation to join the system on the device.

15. As system to implement the delivery of context rich information on the caller's and callee's digital communication device prior to phone or video call initiation, said system comprising:
dedicated digital communication display & control units running on the caller's and callee's digital communication device;
a remote server to be connected to the communication devices taking the caller's call command and delivers context rich call information on both devices prior to call initiation;
a data connection enabling communication between the server and the caller's device and the server and the callee's device;
a GSM or data connection enabling voice based communication between the caller's and the callee's device;
such that the receiver can make an informed decision about how to handle an incoming call during the call negotiation phase whilst informing the caller about the callee prior to call initiation. In addition, the design of the invention assures that any waiting time due to transmission and processing delay's happens on the caller's end rather than the callee's; and it enables secure communication as well as the application of governance rules to phone and video communication.

16. The system of the claim **15,** wherein the following display & control units on the caller's and callee's communication device are present:
a display unit to capture user entered information and to show information such as messages to the user;
a contact list controller that enables the user to select callees from the locally stored contact list;
a message controller that assembles, encrypts, sends, receives, matches and prepares to display messages;
a statistics controller that tracks the call and send the information to the server a contacts storage to add, update, retrieve and delete contracts from;
a message storage to add, update, retrieve and delete messages from.

17. The system of the claim **15,** wherein the following components on the remote server are present:
a user matching engine to match in a call request from a caller with the intended callee and validating mutual access through server stored governance rules;
a call enrichment engine to add social and relational information;
a message optimisation engine to bundle user and call related information and compile messages;
a message delivery engine to receive, decrypt, tailor, reroute, encrypt and send messages;
a statistics engine to initiate, receive, store and retrieve call related information;
an administration section to add, retrieve, alter and remove user and
organisation related information.

18. The system of the claim **15,** further comprising of a server side database with user profiles and connectors to public Internet sources, user authorised Internet sources and 3^{rd} party databases in order to add real time information to existing profiles or to render new profiles in real time.

19. The system of the claim **15,** wherein the device related display & control units operates on a plurality of operating systems and digital communication devices.

20. A method for providing recommendations on other call relevant callees to the caller which comprises the steps of:
When a call has ended or cancelled or is it not possible to reach a sought after callee, the server checks the statistics and profile database using the request information entered by the caller;
When call relevant users are identified, a message is send to the caller's device;
The users are displayed to the caller on the communication device;
The caller can select directly a user after which a new call procedure gets initiated with the same real-time information and with the selected user as new callee;
When no relevant users are found, a message is send to the caller's device;
The caller is informed that no relevant users have been found in relation to his call request;
such that the caller gets faster access to sought after information.
